# EUROPEAN PATENT APPLICATION

(11) **EP 2 837 790 A1**
(43) Date of publication of application: **18.02.2015**
(21) Application number: 13775611.0
(22) Date of filing: 31.01.2013
(51) Int. Cl.: F02B 23/02, F02B 23/08, F02M 61/14

(54) **2-CYCLE GAS ENGINE**

(30) Priority: 11.04.2012 JP 2012090231
(71) Applicant: Mitsubishi Heavy Industries, Ltd., Tokyo 108-8215 (JP)
(72) Inventor: ISHIDA, Hiroyuki, Tokyo 108-8215 (JP); YUUKI, Akihiro, Tokyo 108-8215 (JP); MIYANAGI, Akihiro, Tokyo 108-8215 (JP); HIRAOKA, Naohiro, Tokyo 108-8215 (JP); KOMADA, Yasuyuki, Tokyo 108-8215 (JP)
(74) Representative: Hoffmann Eitle
(86) International application number: PCT/JP2013/052212
(87) International publication number: WO 2013/153840

(57) **Abstract**

An object is to provide a two-cycle gas engine in which generation of NOx (nitrogen oxide) is suppressed by promoting premix of fuel gas with air. A two-cycle gas engine includes a cylinder 2, a cylinder head 3, a piston 4 that defines a combustion chamber "c" with a surrounding wall 2a of the cylinder 2 and the cylinder head 3, a fuel gas injector 8 configured to inject fuel gas 8a, 8b into the combustion chamber "c", an ignition unit 10 configured to ignite the fuel gas inside the combustion chamber, a scavenging port 6 configured to supply air into the combustion chamber "c" upon the piston 4 being positioned in vicinity of a bottom dead center, a fuel gas injection timing control unit 12 configured to cause the fuel gas injector 8 to inject the fuel gas 8b upon the piston 4 being positioned at 10° to 100° before top dead center in an ascending stroke and to cause the fuel gas injector 8 to inject the fuel gas 8a upon the piston 4 being positioned in vicinity of the top dead center, and an ignition timing control unit 12 configured to ignite the fuel gas inside the combustion chamber "c" by the ignition unit 10 upon the piston 4 being positioned in the vicinity of the top dead center.

## Description

### TECHNICAL FIELD

The present invention relates to a two-cycle gas engine.

### BACKGROUND

Conventionally, there has been known a gas engine where a fuel gas being a main fuel is combusted by causing self-ignition of a fuel oil injected into a combustion chamber of a high temperature atmosphere. A fuel gas such as natural gas is used as a main fuel, while a fuel oil such as gas oil having high compression-ignition properties is used as a pilot fuel.

For example, Patent Document 1 discloses a dual-fuel diesel engine where a fuel of a low cetane number having low compression-ignition properties such as a fuel gas is used as a main fuel, while a fuel oil having high compression-ignition properties is used as a pilot fuel. This engine in Patent Document 1 includes a fuel gas injection valve and a pilot fuel injection valve disposed on a cylinder head. The fuel gas and the pilot fuel are injected into a combustion chamber from the fuel gas injection valve and the pilot fuel injection valve, so as to cause self-ignition of the pilot fuel (fuel oil) in the high-temperature combustion chamber, thereby combusting the main fuel (fuel gas).

Further, for instance, Patent Document 2 discloses a gas engine in which the main fuel is a fuel gas having low compression-ignition properties, while the pilot fuel is a diesel fuel having high compression-ignition properties such as gas oil or heating oil. This gas engine in Patent Document 2 includes an intake port disposed on a cylinder head, a diesel fuel injection unit, and a fuel gas injection unit disposed on the surrounding wall of a cylinder. Furthermore, during an intake stroke in which a piston descends, air is introduced into a combustion chamber from the intake port, and then the fuel gas is injected into the combustion chamber from the fuel gas injection unit at an appropriate timing between a later stage of the intake stroke and a later stage of a compression stroke. Moreover, at a timing when the piston has ascended to the vicinity of the top dead center, the diesel fuel is injected into the combustion chamber from the diesel fuel injection unit so as to cause self-ignition of the diesel fuel inside the combustion chamber, thereby combusting the fuel gas being the main fuel.

### Citation List

### Patent Literature

Patent Document 1: JPS62-45339
Patent Document 2: JPH6-137150

### SUMMARY

### Technical Problem

For the engine in Patent Document 1, the main fuel and the pilot fuel are supplied to the combustion chamber almost at the same time in the vicinity of the top dead center. Thus, the main fuel injected into the combustion chamber is immediately combusted before being stirred. Accordingly, the combustion of the main fuel takes place as diffusion combustion. In the case of diffusion combustion, uniform combustion is difficult compared to the case of premix combustion, which raises a problem of NOx (nitrogen oxide) being generated more easily in a high-temperature combustion range.

Further, the above described engine in Patent Document 2 is an invention that has been made to increase the amount of air taken into the combustion chamber. That is, for the invention disclosed in Patent Document 2, compared to the conventional case in which a mixed air of a fuel gas and air is introduced from an intake port, only air is taken in from the intake port and the fuel gas injection unit is provided separately. Furthermore, the fuel gas is injected into the combustion chamber at a timing different from the intake stroke by the fuel gas injection unit, so as to increase the amount of air taken into the combustion chamber from the intake port, thereby improving the output of the engine.

Patent Document 2 as described above does not disclose the technical idea of promoting premix so as to suppress generation of NOx (nitrogen oxide).

The present invention was made in view of the above problem, and to provide a two-cycle gas engine where premix of a fuel gas and air is promoted so as to suppress generation of NOx (nitrogen oxide).

### Solution to Problem

A two-cycle gas engine of the present invention includes: a cylinder; a cylinder head; a piston housed in the cylinder and configured to define a combustion chamber with a surrounding wall of the cylinder and the cylinder head; a fuel gas injector disposed on the cylinder head and configured to inject a fuel gas into the combustion chamber; an ignition unit disposed on the cylinder head and configured to ignite the fuel gas inside the combustion chamber; a scavenging port opened on the surrounding wall of the cylinder and configured to supply air into the combustion chamber upon the piston being positioned in vicinity of a bottom dead center; a fuel gas injection timing control unit configured to cause the fuel gas injector to inject the fuel gas upon the piston being positioned at 10° to 100° before top dead center in an ascending stroke and to cause the fuel gas injector to inject the fuel gas upon the piston being positioned in vicinity of the top dead center; and an ignition timing control unit configured to ignite the fuel gas inside the combustion chamber by the ignition unit upon the piston being positioned in the vicinity of the top dead center.

The two-cycle gas engine of the present invention having the above configuration includes the fuel gas injector configured to inject the fuel gas into the combustion chamber, the ignition unit configured to ignite the fuel gas inside the combustion chamber, the scavenging port configured to supply air into the combustion chamber upon the piston being positioned in the vicinity of the bottom dead center, the fuel gas injection timing control unit configured to cause the fuel gas injector to inject the fuel gas upon the piston being positioned at 10° to 100° before top dead center and to cause the fuel gas injector to inject the fuel gas upon the piston being positioned in the vicinity of the top dead center; and the ignition timing control unit configured to ignite the fuel gas inside the combustion chamber by the ignition unit upon the piston being positioned in the vicinity of the top dead center.

According to the present invention, fuel gas is injected upon the piston being positioned at 10° to 100° before top dead center. Upon the piston being positioned in the vicinity of the top dead center, fuel gas is further injected and the fuel gas inside the combustion chamber is ignited by the ignition unit. Thus, premix of the fuel gas that has been injected upon the piston being positioned at 10° to 100° before top dead center and the air is promoted. As a result, the proportion of the diffusion combustion to the entire combustion is reduced, which makes it possible to suppress generation of NOx (nitrogen oxide).

Further, the above described two-cycle gas engine of the present invention can be achieved by only controlling the ignition timing of the fuel gas by the fuel gas injection timing control unit including an engine control unit (ECU) or the like, for instance. Thus, it is possible to promote premix easily for an existing two-cycle gas engine without requiring a new additional device or the like.

Further, in the present invention, the fuel gas injector may further include: a first fuel gas injector configured to inject the fuel gas into the combustion chamber upon the piston being positioned in the vicinity of the top dead center; and a second fuel gas injector configured separately from the first fuel gas injector so as to inject the fuel gas into the combustion chamber upon the piston being positioned at 10° to 100° before top dead center.

With the fuel gas injector including the first fuel gas injector and the second fuel injector provided separately from each other, it is possible to differentiate the direction of injection, pressure condition, etc of the fuel gas between the first fuel gas injector and the second fuel injector. That is, as the preferable direction and pressure of injection for the fuel gas are varied between the time when the piston is positioned at 10° to 100° before top dead center and the time when the piston is in the vicinity of the top dead center, the above configuration of the present invention makes it possible to inject the fuel gas into the combustion chamber in the optimal direction and at optimal pressure of injection regardless of the position of the piston.

### Advantageous Effects

According to the present invention, it is possible to provide a two-cycle gas engine, in which the fuel gas is injected upon the piston being positioned at 10° to 100° before top dead center so as to promote premix of the fuel gas with the air and reduce the proportion of diffusion combustion to the entire combustion, which makes it possible to suppress generation of NOx (nitrogen oxide).

### BRIEF DESCRIPTION OF DRAWINGS

FIGs. 1A and 1B are schematic diagrams for describing the basic configuration of a two-cycle gas engine according to the present invention.
FIGs. 2A and 2B are schematic diagrams for describing the basic configuration of the two-cycle gas engine according to the present invention.
FIGs. 3A to 3C are schematic diagrams for describing a two-cycle gas engine according to the first embodiment of the present invention.
FIGs. 4A to 4C are schematic diagrams for describing a two-cycle gas engine according to the second embodiment of the present invention.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

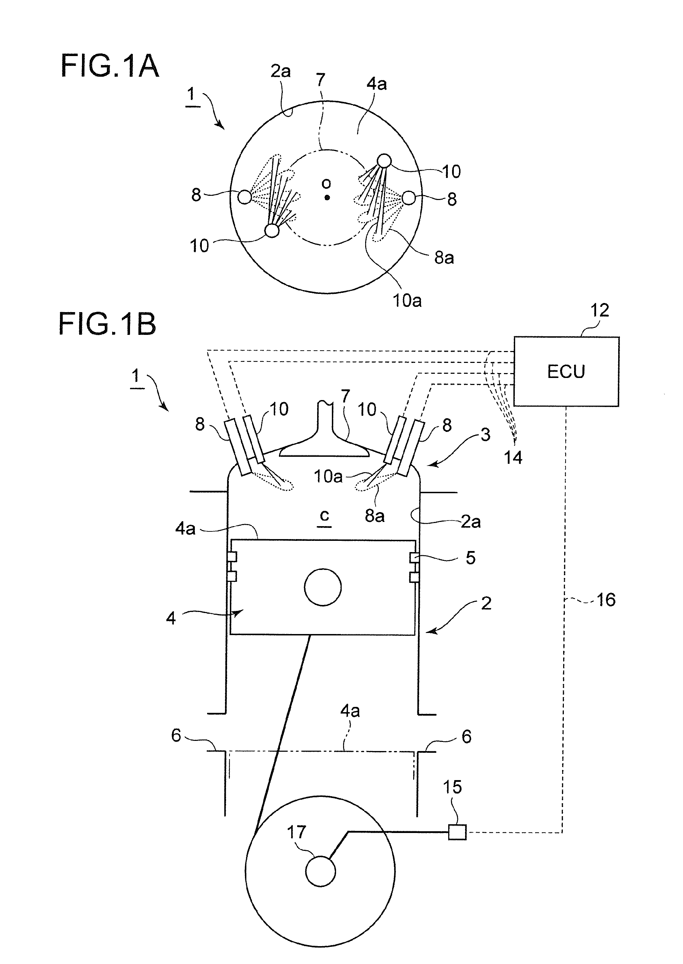

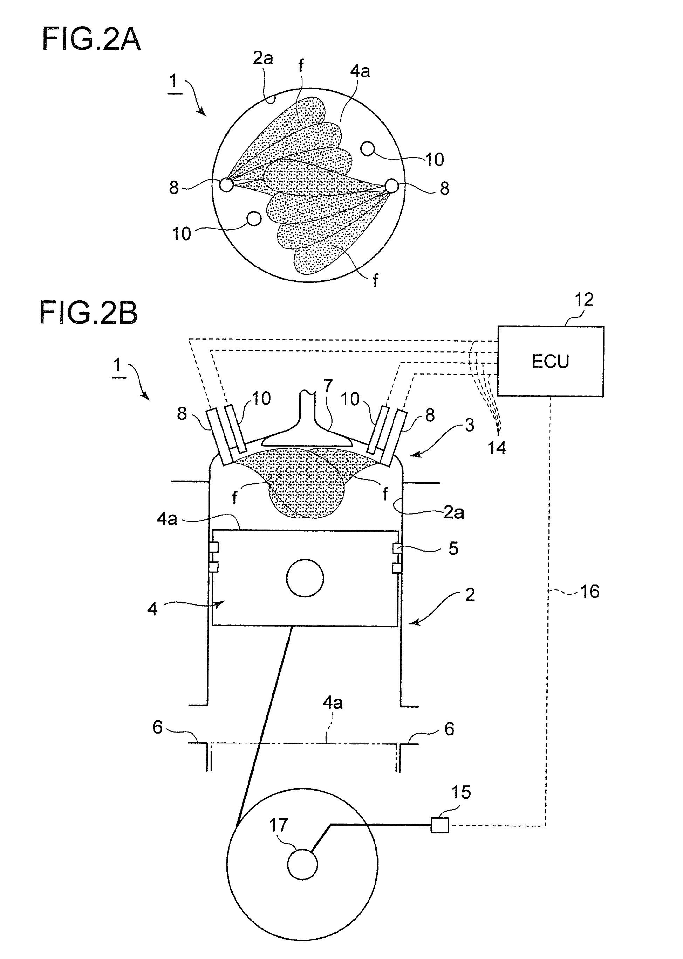

FIGs. 1A and 1B, as well as FIGs. 2A and 2B, are schematic diagrams for describing the basic configuration of a two-cycle gas engine of the present invention. FIGs. 1A and 2A are top views and FIGs. 1B and 1B are cross-sectional views. First, the basic configuration of the two-cycle gas engine of the present invention will be described in reference to these drawings.

As illustrated in FIGs. 1A to 2B, a two-cycle gas engine 1 of the present invention includes a cylinder 2 of a cylindrical shape, a cylinder head 3 connected to an upper end side of the cylinder 2, and a piston 4 housed inside the cylinder 2 so as to be freely reciprocable. Further, a combustion chamber "c" is defined by the surrounding wall 2a of the cylinder 2, the cylinder head 3, and the top face 4a of the piston 4. Here, the reference number 5 in the drawings indicates a piston ring.

Further, scavenging ports 6 open at the surrounding wall 2a at the lower side of the cylinder 2. The scavenging ports 6 are formed above the top face 4a of the piston 4 being positioned in the vicinity of the bottom dead center (the double-dotted chain line represents such top face 4a), so that, when the piston 4 is in the vicinity of the bottom dead center, air is supplied to the combustion chamber "c" from the scavenging ports 6. Also, on the top part of the cylinder head 3, an exhaust port opens at and an exhaust valve 7 for opening and closing the exhaust port is disposed. During a scavenging stroke in which the piston 4 is in the ascending stroke, the exhaust valve 7 is kept open until the piston 4 arrives at the position of approximately 100° before top dead center. Then, the air supplied to the combustion chamber "c" from the scavenging ports 6 scavenges the exhaust gas in the combustion chamber "c" remaining from the previous stroke.

As illustrated in FIGs. 1A and 1B, on the cylinder head 3, fuel gas injection units 8 (fuel gas injector) that inject fuel gas 8a into the combustion chamber "c" are disposed, as well as fuel oil injection units 10 (ignition unit) that also inject fuel oil 10a having high compression-ignition properties into the combustion chamber "c". A pair of fuel gas injection unit 8 and fuel oil injection unit 10 is formed on each of the two positions that are distanced by 180° from each other in the circumferential direction around the cylinder center "o" as the rotational center.

In the present embodiment, each of the fuel gas injection units 8 and the fuel oil injection units 10 has four nozzle holes. Also, in the preset invention, the number of the installed fuel gas injection units 8 and fuel oil injection units 10 is not particularly limited and it may be one for each, for instance. However, in the present embodiment where the exhaust valve 7 is disposed on the top part of the cylinder head 3, it is preferable that a plurality of fuel gas injection units 8 are arranged at equal intervals in the circumferential direction, and so are a plurality of the fuel oil injection units 10.

As illustrated in FIGs. 1A to 2B, the fuel gas injection units 8 and the fuel oil injection units 10 are connected to an engine control unit (ECU) 12 through cables 14. Further, the ECU 12 is connected to a crank angle sensor 15 that detects a rotation angle of a crank shaft 17 through a cable 16. The ECU 12 detects a phase of the piston 4 by receiving a signal regarding a rotation angle of the crank shaft 17 from the crank angle sensor 15. Further, the fuel gas injection units 8 and the fuel oil injection units 10 inject the fuel gas 8a and the fuel oil 10a into the combustion chamber "c" at a predetermined timing based on a signal transmitted from the ECU 12. Moreover, as illustrated in FIGs. 1A and 1B, upon the piston being positioned in the vicinity of the top dead center, the fuel gas injection units 8 and the fuel oil injection units 10 inject the fuel gas 8a and the fuel oil 10a almost at the same time, so as to cause self-ignition of the fuel oil 10a having high compression-ignition properties inside the combustion chamber "c" of a high-temperature atmosphere. As a result, the fuel gas 10a that has been injected almost at the same time is combusted so as to generate flame "f" inside the combustion chamber "c" as illustrated in FIGs. 2A and 2B.

In other words, the ECU 12 constitutes a fuel gas injection timing control unit of the present invention, and also an ignition timing control unit of the present invention that ignites the fuel gas inside the combustion chamber "c" using the fuel injection units 10 upon the piston 4 being positioned in the vicinity of the top dead center. Herein, "in the vicinity of the top dead center" in the present invention means the state in which the piston 4 is positioned in a range of from 10° before top dead center to 20° after top dead center.

### (First embodiment)

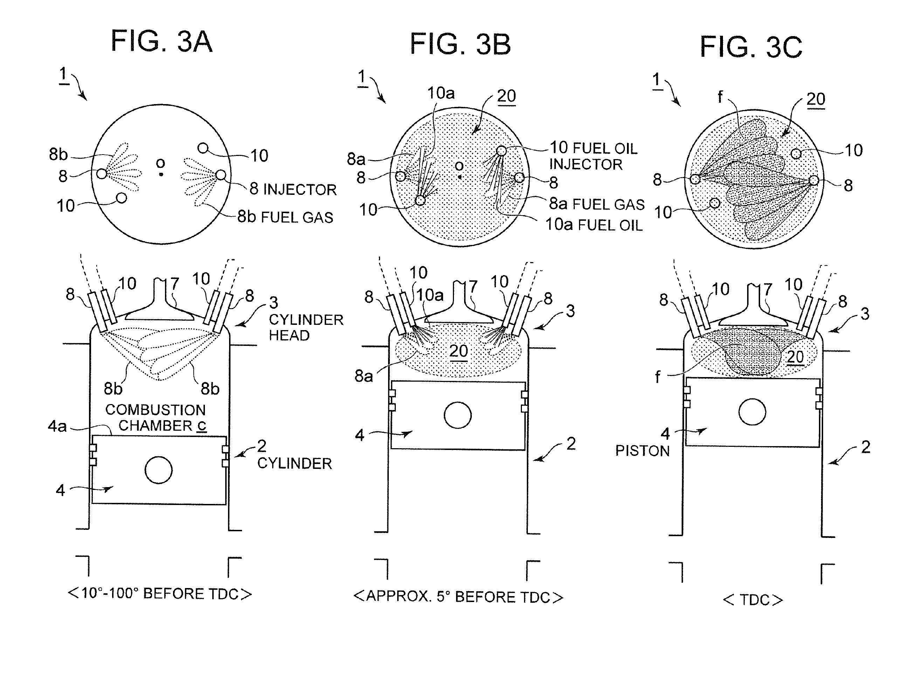

Next, a two-cycle gas engine of the first embodiment of the present invention will be described in reference to FIGs. 3A to 3C.

FIGs. 3A to 3C are schematic diagrams for describing a two-cycle gas engine according to the first embodiment of the present invention. FIGs. 3A to 3C respectively illustrates (a) a state where the piston 4 is positioned at 10° to 100° before top dead center, (b) a state where the piston 4 is positioned at approximately 5° before top dead center, and (c) a state where the piston 4 is positioned at the top dead center.

For a two-cycle gas engine 1 of the present embodiment, fuel gas 8b is injected into the combustion chamber "c" from the fuel gas injection units 8 based on a signal transmitted from the above described ECU 12 (fuel gas injection timing control unit) when the piston 4 is in the ascending stroke and also positioned at 10° to 100° before top dead center (the state illustrated in FIG. 3A). By the fuel gas 8b being injected into the combustion chamber "c" when the piston 4 is positioned at 10° to 100° before top dead center as described above, the injected fuel gas 8b and the air inside the combustion chamber "c" are mixed so as to promote premix during further ascension of the piston 4 toward the vicinity of the top dead center. Accordingly, mixed air 20 is produced inside the combustion chamber "c" as illustrated in FIG. 3B.

Further, upon the piston 4 arriving at the vicinity of the top dead center (for example, approximately 5° before top dead center), fuel gas 8a is injected from the fuel gas injection units 8 and fuel oil 10a is injected from the fuel oil injection units 10, based on a signal transmitted from the above described ECU 12 (fuel gas injection timing control unit and ignition timing control unit).

As a result, the fuel oil 10a having high compression-ignition properties self-ignites, and thereby the injected fuel gas 8a is combusted. Further, as illustrated in FIG. 3C, combustion flame "f" is produced inside the combustion chamber "c". Then, the combustion flame "f" transfers to the above described mixed air 20 so as to cause explosive combustion inside the entire combustion chamber "c".

As described above, in the two-cycle gas engine 1 of the present embodiment, the fuel gas 8b is injected upon the piston 4 being positioned at 10° to 100° before top dead center. Further, the fuel gas 8a and the fuel oil 10a are injected upon the piston 4 being positioned in the vicinity of the top dead center. Thus, premix of the fuel gas 8b, that has been injected upon the piston 4 being positioned at 10° to 100° before top dead center, with the air is promoted so as to produce mixed air 20, causing a part of the combustion to become premix combustion. As a result, compared to the conventional gas engines where the entire combustion is diffusion combustion, it is possible to suppress generation of NOx (nitrogen oxide).

Further, the two-cycle gas engine 1 of the present embodiment can be achieved by only controlling the ignition timing of the fuel gas injection units 8 by the fuel gas injection timing control unit including the ECU 12. Thus, it is possible to promote premix easily in an existing two-cycle gas engine without requiring a new additional device or the like.

### (Second embodiment)

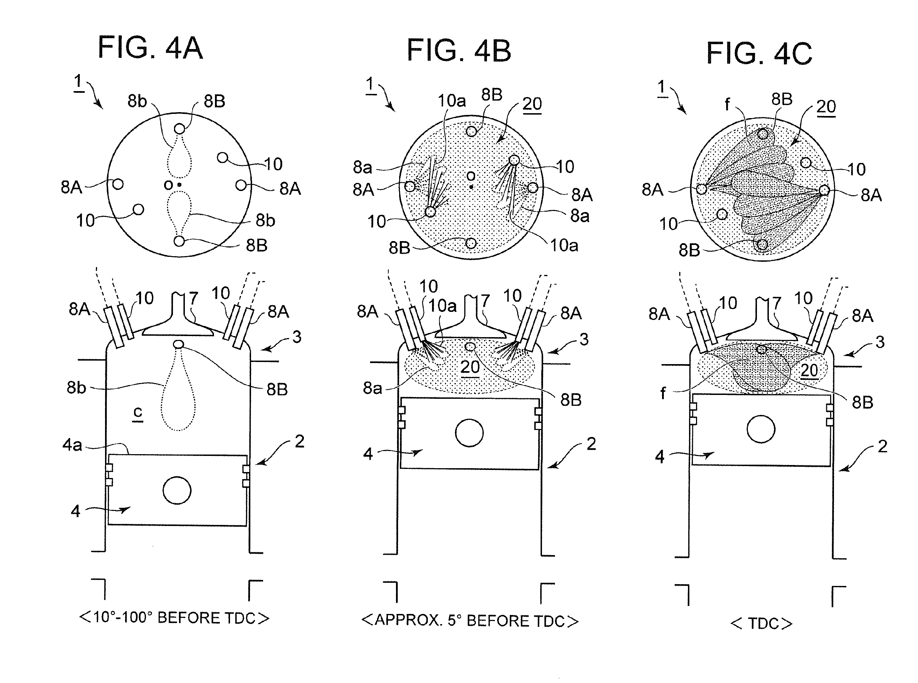

Next, a two-cycle gas engine of the second embodiment of the present invention will be described in reference to FIGs. 4A to 4C.

FIGs. 4A to 4C are schematic diagrams for describing a two-cycle gas engine according to the second embodiment of the present invention. FIGs. 4A to 4C respectively illustrates (a) a state where the piston 4 is positioned at 10° to 100° before top dead center, (b) a state where the piston 4 is positioned at approximately 5° before top dead center, and (c) a state where the piston 4 is positioned at the top dead center.

Unlike the above described embodiment, a two-cycle gas engine 1 of the present embodiment has a fuel gas injection unit including a first fuel gas injector (first fuel gas injection unit 8A) and a second fuel gas injector (second fuel gas injection unit 8B) separately provided from each other. The first fuel gas injection units 8A are disposed, for instance, on the same positions, in the same directions, and of the same number as those of the fuel gas injection units 8 of the above described embodiment. On the other hand, as illustrated in FIGs. 4A to 4C, a second fuel gas injection unit 8B is formed on each of the two positions in middle of the two first fuel gas injection units 8A, 8A, the positions being distanced by 180° from each other in the circumferential direction around the cylinder center "o" as the rotational center. Further, the first fuel gas injection units 8A and the second fuel gas injection units 8B are each connected to the above described ECU 12 (fuel gas injection timing control unit).

As illustrated in FIG. 4A, the second fuel gas injection units 8B inject fuel gas 8b into the combustion chamber "c" based on a signal transmitted from the ECU 12 upon the piston 4 being positioned at 10° to 100° before top dead center during its ascending stroke. Then, as illustrated in FIG. 4B, fuel gas 8a is injected from the first fuel gas injection units 8A into the combustion chamber "c" based on a signal transmitted from the ECU 12 (fuel gas injection timing control unit) upon the piston 4 arriving at the vicinity of the top dead center (for example, approximately 5° before top dead center). Moreover, similarly to the above described embodiment, the fuel oil 10a is injected from the fuel oil injection units 10 based on a signal transmitted from the ECU 12 (ignition timing control unit) almost at the same time as the injection of the fuel gas 8a.

As described above, with the fuel gas injector of the present invention including the first fuel gas injector (first fuel gas injection unit 8A) and the second fuel injector (second fuel gas injection unit 8B) provided separately from each other, it is possible to differentiate the direction of fuel gas injection between the first fuel gas injection unit 8A and the second fuel gas injection unit 8B. Thus, as illustrated in FIGs. 4A to 4C, the direction of injection for the fuel gas 8b injected from the second fuel gas injection unit 8B is oriented downward compared to the direction of ignition for the fuel gas 8a injected from the first fuel gas injection unit 8A, so that the fuel gas 8b is stirred inside the combustion chamber "c", which promotes premix of the fuel gas 8b. Also, upon the piston being positioned at 10° to 100° before top dead center, the pressure inside the combustion chamber "c" is lower than that of the case in which the piston 4 is in the vicinity of the top dead center. Thus, it is possible to employ a suitable injection unit that is different from the first fuel gas injection unit 8A and has a working pressure applicable to the second fuel gas injection unit 8B, as the second fuel gas injection unit 8B.

As described above, according to the two-cycle gas engine 1 of the present invention, it is possible to provide a two-cycle gas engine in which the fuel gas 8b is injected from the fuel gas injector (the fuel gas injection units 8 or the second fuel gas injection units 8B) upon the piston 4 being in the ascending stroke and also being positioned at 10° to 100° before top dead center, so as to promote premix of the fuel gas 8b with the air and reduce the proportion of diffusion combustion to the entire combustion, thereby suppressing generation of NOx (nitrogen oxide).

Embodiments of the present invention were described in detail above, but the present invention is not limited thereto, and various amendments and modifications may be implemented within a scope that does not depart from the present invention.

For instance, in the above described embodiments, the fuel oil injection units 10 constitute the ignition unit. Further, as described above, the fuel oil 10a having high compression-ignition properties is injected into the combustion chamber "c" of a high-temperature atmosphere from the fuel oil injection units 10 based on a signal transmitted from the ECU 12 (ignition timing control unit) so as to ignite the fuel gas inside the combustion chamber "c". However, the ignition unit for the present invention is not limited to this. For instance, it may be configured such that the ignition unit includes spark plugs disposed on the cylinder head 3, the spark plugs being operated based on a signal transmitted from the ECU 12 (ignition timing control unit) so that the fuel gas inside the combustion chamber "c" is ignited by sparks produced by the spark plugs.

### Industrial Applicability

The two-cycle gas engine of the present invention can be suitably used as an engine for a construction machine, for a heavy vehicle, for power generation, etc, and in particular for a ship.

## Claims

1. A two-cycle gas engine comprising:
a cylinder;
a cylinder head;
a piston housed in the cylinder and configured to define a combustion chamber with a surrounding wall of the cylinder and the cylinder head;
a fuel gas injector disposed on the cylinder head and configured to inject a fuel gas into the combustion chamber;
an ignition unit disposed on the cylinder head and configured to ignite the fuel gas inside the combustion chamber;
a scavenging port opened on the surrounding wall of the cylinder and configured to supply air into the combustion chamber upon the piston being positioned in vicinity of a bottom dead center;
a fuel gas injection timing control unit configured to cause the fuel gas injector to inject the fuel gas upon the piston being positioned at 10° to 100° before top dead center in an ascending stroke and to cause the fuel gas injector to inject the fuel gas upon the piston being positioned in vicinity of the top dead center; and
an ignition timing control unit configured to ignite the fuel gas inside the combustion chamber by the ignition unit upon the piston being positioned in the vicinity of the top dead center.

2. The two-cycle gas engine according to claim 1,
wherein the fuel gas injector includes:
a first fuel gas injector configured to inject the fuel gas into the combustion chamber upon the piston being positioned in the vicinity of the top dead center; and
a second fuel gas injector configured separately from the first fuel gas injector so as to inject the fuel gas into the combustion chamber upon the piston being positioned at 10° to 100° degrees before top dead center.

## Amended claims

### Amended claims under Art. 19.1 PCT

**1.** A two-cycle gas engine comprising:
a cylinder;
a cylinder head;
a piston housed in the cylinder and configured to define a combustion chamber with a surrounding wall of the cylinder and the cylinder head;
a fuel gas injector disposed on the cylinder head and configured to inject a fuel gas into the combustion chamber;
an ignition unit disposed on the cylinder head and configured to ignite the fuel gas in the combustion chamber by injecting a fuel oil into the combustion chamber to cause self-ignition of the fuel oil;
a scavenging port opened on the surrounding wall of the cylinder and configured to supply air into the combustion chamber upon the piston being positioned in vicinity of a bottom dead center;
a fuel gas injection timing control unit configured to cause the fuel gas injector to inject the fuel gas upon the piston being positioned before vicinity of a top dead center in an ascending stroke and to cause the fuel gas injector to inject the fuel gas upon the piston being positioned in the vicinity of the top dead center; and
an ignition timing control unit configured to ignite the fuel gas inside the combustion chamber by the ignition unit upon the piston being positioned in the vicinity of the top dead center.

**2.** The two-cycle gas engine according to claim 1,
wherein the fuel gas injector includes:
a first fuel gas injector configured to inject the fuel gas into the combustion chamber upon the piston being positioned in the vicinity of the top dead center; and
a second fuel gas injector configured to inject the fuel gas into the combustion chamber upon the piston being positioned before the vicinity of the top dead center, and
wherein the second fuel gas injector is configured to inject the fuel gas in an injection direction which is oriented downward compared to an injection direction in which the first fuel gas injector is configured to inject the fuel gas.
